# EUROPEAN PATENT SPECIFICATION

(11) **EP 2 904 038 B1**
(45) Date of publication and mention of the grant of the patent: **18.04.2018**
(21) Application number: 13777109.3
(22) Date of filing: 08.10.2013
(51) Int. Cl.: C08L 33/26, C08L 5/04, C08F 2/50, C08J 5/04, C08F 2/44, C08J 5/24

(54) **HYDROGEL COMPOSITES**
HYDROGELVERBUNDSTOFFE
COMPOSITES D'HYDROGEL

(30) Priority: 08.10.2012 GB 201217989; 07.02.2013 GB 201302175
(43) Date of publication of application: 12.08.2015
(73) Proprietor: First Water Limited, Marlborough Wiltshire SN8 2RB (GB)
(72) Inventor: MUNRO, Hugh Semple, Chipping Campden Warwickshire GL55 6QT (GB); ANDREWS, Philip, Marlborough Wiltshire SN8 2RB (GB)
(74) Representative: Rogers, Alex Lee
(86) International application number: PCT/GB2013/052616
(87) International publication number: WO 2014/057254

(56) References cited:
- EP-A1- 1 607 412
- WO-A1-97/41900
- WO-A1-2006/061604
- WO-A1-2011/079380

## Description

### Field of the Invention

The present invention relates to hydrogel composites and their manufacture, and, in some embodiments, to composites, comprising cross-linked hydrogels and aqueous solution swellable fibrous materials, having high rates of absorption and high quantities of water, saline or biological fluids. The invention also relates to such hydrogel composites suitable for use in a variety of applications, such as wound and bums dressings, haemostatic devices, ostomy devices, biomedical electrodes and other devices where contact with mammalian skin is required.

The expression "hydrogel" and like expressions, used herein, are not to be considered as limited to gels which contain water, but extend generally to all hydrophilic gels and gel compositions, including those containing organic non-polymeric components in the absence of water.

### Background of the Invention

Hydrogels are macromolecular networks swollen partially or to equilibrium with a suitable fluid, normally an aqueous fluid. It is known that hydrogels are useful in a number of biomedical applications, including but not limited to wound and bums dressings, biomedical electrodes and skin adhesives, particularly because of their ability to donate and absorb fluid and hence maintain a moist but not wet environment.

There are, however, disadvantages with prior art hydrogel compositions and materials in that the rate of absorption of fluids e.g. the exudate arising from a wound and the rate of moisture evaporation can be low.

EP-B-0901382 describes improved reinforced hydrogel compositions based on alginate fibres impregnated with pre-made hydrophilic polymers that are crosslinked by ions released from the fibres. These hydrogels are in a hydrated form and donate moisture to a wound. These materials require the release of cations from the fibre to crosslink the hydrophilic polymer. Hence, the range and scope of materials that may be used for manufacturing these reinforced hydrogels is limited to polymers having pendant carboxylic acid groups.

WO2006/061604A1 describes transparent hydrogels made by impregnating a hydrogel precursor solution into a swellable fibre matrix. No examples were given, no gel to fibre ratios were disclosed and no absorption data were disclosed.

EP 1607412 A1 disclosed a method for making hydrogel impregnated swellable fibre composites. Complete impregnation of the fibrous material was exemplified. Absorption data over a 24 hour period were disclosed.

The prior art systems do not acknowledge the importance of the improvements in the rates of absorption and moisture vapour transmission that can be obtained with hydrogel/fibre composites by the partial impregnation of the fibrous material with a hydrogel.

### Brief Description of the Invention

According to a first aspect of the present invention, there is provided a composite hydrogel/fibre structure possessing improved rates of absortion and moisture vapour transmission. According to a second aspect of the present invention, there are provided a method of forming the composite hydrogel/fibre structure. The hydrogel/fibre composite structures may be produced by a method comprising: partially impregnating fibres of an water-swellable fibrous material with an aqueous precursor solution comprising at least one polymerisable, and optionally also crosslinkable, monomer such that at least partial swelling of the fibres takes place, and polymerising, and optionally also crosslinking, the at least one monomer after impregnation of the fibres and a least partial swelling of the fibres such that the integrity of the fibrous material is at least partially preserved in the resulting hydrogel/fibre composite.

Generally speaking, when crosslinking does not take place, polymeric entanglement will normally take place to provide the desirable properties of the hydrogel/fibre composite.

Preferably, the crosslinking, when present, is achieved totally by means other than cation release from fibres of the fibrous material.

According to a third aspect of the present invention, there is provided a biomedical product comprising the hydrogel/fibre composite as described herein.

In an embodiment, there is provided a hydrogel/fibre composite structure producible by a method comprising: partially impregnating fibres of a water-swellable fibrous material with an aqueous hydrogel precursor solution comprising at least one polymerisable, and optionally crosslinkable, monomer such that at least partial swelling of the impregnated fibres takes place, and polymerising, and optionally crosslinking, the at least one monomer after impregnation of the fibres and at least partial swelling of the fibres to form the hydrogel within the impregnated fibres of the fibrous material, such that the integrity of the fibrous material is at least partially preserved in the resulting hydrogel/fibre composite.

In a further embodiment, there is provided a method of forming a hydrogel/fibre composite structure, the method comprising: partially impregnating fibres of a water-swellable fibrous material with an aqueous hydrogel precursor solution comprising at least one polymerisable, and optionally crosslinkable, monomer such that at least partial swelling of the impregnated fibres takes place, and polymerising, and optionally crosslinking, the at least one monomer after impregnation of the fibres and at least partial swelling of the fibres to form the hydrogel within the impregnated fibres of the fibrous material, such that the integrity of the fibrous material is at least partially preserved in the resulting hydrogel/fibre composite. The composite hydrogel/fibre structure may be produced by or producible by the method described herein.
Optional and preferred features of the method, hydrogel/fibre composite structure and article will be described herein. Unless otherwise stated, any optional or preferred feature may be combined with any aspect or embodiment of the invention or any other optional or preferred feature.
Optionally, the ratio of WA to WW is from 3:1 to 15:1, wherein WA is the weight of fluid (in grams) absorbed in 30 minutes per 100cm² unit area of the hydrogel/fibre composite structure and WW is the weight (in grams) of fluid absorbed in 30 minutes per unit weight (in grams) of hydrogel/fibre composite structure. Optionally, the ratio of WA to WW is from 3:1 to 11:1. Optionally, the ratio of WA to WW is from 4:1 to 10.5:1. Optionally, the ratio of WA to WW is from 4.5:1 to 10.5:1. Optionally, the ratio of WA to WW is from 5:1 to 10:1. Optionally, the ratio of WA to WW is from 6:1 to 9:1. WA and WW may be measured using standard techniques, for example those described below. Optionally, the hydrogel to fibre weight:weight ratio is from 3:1 to 9:1. Optionally, the hydrogel to fibre weight:weight ratio is from 3.5:1 to 9:1. Optionally, the hydrogel to fibre weight:weight ratio is from 4:1 to 9:1, optionally 5:1 to 9:1, optionally 6:1 to 9:1, optionally 7:1 to 9:1.
Optionally, during polymerisation of the at least one monomer, there is an inhomogenous distribution of hydrogel precursor solution throughout the fibrous material.
Optionally, during polymerisation, some of the fibrous material has not been impregnated with the hydrogel precursor solution.

Optionally, the hydrogel/fibre composite is in the form of a layer, and, through at least part of the depth of the layer, there is a gradient in the hydrogel per unit volume or unit weight of fibrous material.

Optionally, the fibrous material, before impregnation with the hydrogel precursor solution, is in the form of a layer having opposing first and second faces, and the hydrogel precursor solution is applied only to the first of the two opposing faces, and the polymerisation carried out such that the resultant structure has a first face of fibres impregnated with hydrogel and the opposing second face having a lower amount of hydrogel (in weight of hydrogel per unit weight of water-swellable fibres) impregnated into the fibres compared to the first face. Optionally, after the polymerisation, at least some of the fibres, for example the exposed fibres, on the second face are substantially free of hydrogel.

Optionally, the fibrous material, before impregnation with the hydrogel precursor solution, is in the form of a layer having opposing first and second faces, and the hydrogel precursor solution is applied to the first and second faces, and the polymerisation carried out such that in a region between first and second faces there are fibres having a lower amount of hydrogel (in weight of hydrogel per unit weight of water-swellable fibres) impregnated into the fibres compared to the fibres at the first face and the second face. Optionally, after the polymerisation, in the region between first and second faces at least some of the fibres are substantially free of hydrogel.

Optionally, the hydrogel/fibre composite structure has at least one face, wherein a first region on the at least one face that contains hydrogel-impregnated fibres and a second region on the at least one face that contains fibres that are substantially free of hydrogel. Optionally, (i) the first region is in a form of lanes and disposed between at least two of which is the second region or (ii) the first region is in the form of at least one island, wherein the second region surrounds the at least one island of the first region or (iii) the second region is in the form of at least one island and the first region surrounds the at least one island of the second region.

Optionally, the fibrous material, before impregnation, comprises a material selected from an alginate and a poly(meth)acrylate. "(meth)acrylate" indicates that a methyl group may or may not be present on the acrylate group.

Optionally, the fibrous material, before impregnation, comprises calcium alginate.

Optionally, the hydrogel comprises a hydrophilic polymer having multiple pendant sulphonyl groups, optionally with multiple pendant carboxylic groups. Optionally, at least some of the pendant sulphonyl groups are in salt form. Optionally, the polymerisable monomer is selected from the 2-acrylamido-2-methylpropane sulphonic acid, which is optionally in salt form; acrylic acid (3-sulphopropyl) ester, which is optionally in salt form; N-acryloyl morpholine; and hydroxyethyl acrylamide.

The present inventors have found that embodiments of the present invention can provide hydrogel/fibre composites in which a surprising enhancement of the rate and extent of absorption of aqueous fluids is achieved in comparison with the hydrogel alone and the fibrous material alone. For example, using the Free Swell Absorption Capacity method, Test methods for primary wound dressings - Part 1: Aspects of absorbency, PN-EN 13726-1:2005 [1] to assess the fluid handling properties of wound dressings, used in the Examples described below, the amount of fluid absorbed in 30 minutes can be reported as the weight of fluid absorbed (for example in grams) per unit area (for example 100cm² of the dressing (denoted herein as WA) or as the weight (for example in grams) of fluid absorbed per unit weight (for example in grams) of dressing (denoted herein as WW). The ratio of WA to WW is indicative of the absorption capability of a dressing arising from the area size of the dressing and the amount of material by weight in the dressing.

A typical, water-swellable-fibre-only dressing can possess values for WA of, for example, 15g/100cm² to 25g/100cm² and values for WW of, for example, about 10g/g to 20g/g in a 30 minute period. The ratio of WA:WW is typically in the range 0.75:1 to 2.5:1. These values reflect a fast rate of absorption per unit weight of dressing and a low weight of material per unit area of dressing.

A partially hydrated hydrogel (i.e. absent any water-swellable fibres) can possess values for WA of, for example, 20g/100cm² to 40g/100cm² and values for WW of, for example, about 1.0g/g to 2.5g/g in a 30 minute period giving rise to WA:WW ratios greater than 8:1. The ratio of WA:WW for comercially available partially hydrated hydrogels is typically greater than 15:1. Values greater than 15:1 reflect a low rate of aborption per unit weight of dressing and a high weight of material per unit area of dressing. For hydrogels values of WA:WW less than 15:1 arise from a low rate of aborption per unit weight of dressing and a moderate weight of material per unit area of dressing.

The present inventors have surprisingly found that the partially impregnated hydrogel/swellable fibre composite structures of the present invention possessing WA:WW values between 3:1 and 15:1 possess a moderate rate of absorption per unit weight of dressing (greater than 3g/g), a high absorption rate per unit area (greater than 30g/100cm²) and a moderate weight of material per unit area.

Furthermore, the hydrogel/fibre composites in accordance with the present invention have been found to be capable of possessing a higher mositure vapour transmisssion rate (MVTR) than prior art hydrogels as determined by Test methods for primary wound dressings - Part 2: Moisture vapour transmission rate of permeable film dressings" PN EN 13726-2:2005 [2], Moisture vapour transmission rate (MVTR) of a wound dressing when in contact with a liquid, as used in the Examples described below.

These properties can provide the basis for valuable uses of embodiments of the hydrogel/fibre composites described herein, for example in the manner described below, as a substantial disadvantage of prior art hydrogels has been slow rates of fluid absortion and low moisture vapour transmission.

In a further embodiment, which may be combined with any of the other embodiments mentioned herein, at least part of the hydrogel/fibre composite structure is compressed. In an embodiment, the hydrogel/fibre composite structure comprises compressed and substantially non-compressed areas. In an embodiment, the hydrogel/fibre composite structure comprises a plurality of substantially non-compressed areas in the form of discrete islands, each of which is surrounded by a compressed area. The compressed area may be in the form of a sea having a plurity of islands of non-compressed areas, each of which is surrounded by the sea of compressed area. The method of forming a hydrogel/fibre composite may involve, after partially impregnating fibres of the water-swellable fibrous material with the aqueous hydrogel precursor solution, compressing at least part of the fibrous material, and then polymerising and, optionally, crosslinking the at least one monomer to form the hydrogel within the impregnated fibres of the fibrous material, such that at least some of the hydrogel/fibrous composite is compressed. The present inventors have found that producing a fibre composite with compressed and non-compressed areas has advantages in reducing lateral wicking of fluid.

### Brief Description of the Figures

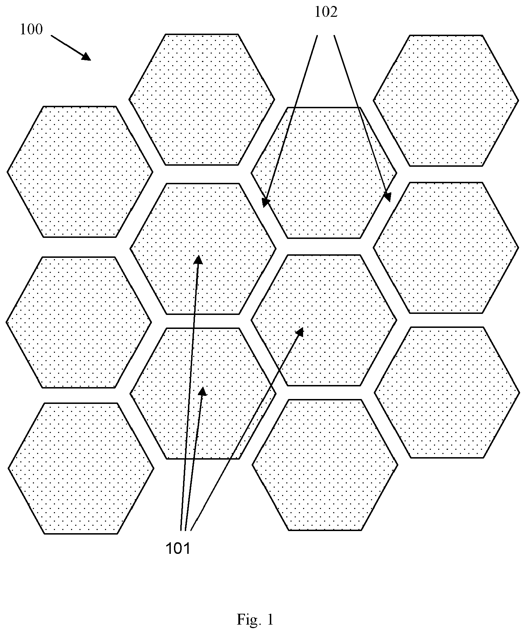

Figure 1 illustrates schematically an embossing or compression pattern that can be used in an embodiment of the present invention.

### Detailed Description of the Invention

### The Fibrous Material

The fibrous material, before impregnation with any hydrogel, is preferably a coherent structure comprising fibres, capable of being swollen by aqueous fluid, that are held together (e.g. by interweaving, needling, entangling, adhesion, compaction, partial melting together or a combination thereof) to maintain overall coherency of the structure. The expression "fibres" includes all elongate forms such as strips, strands and threads. The fibres may be of unitary construction (e.g. by extrusion) or may be composed of a plurality of smaller filaments, which themselves may be secured together in the fibre by any approporiate means, e.g. by intertwining, entangling, spinning, adhesion, partial melting together or a combination thereof. Examples of such structures are knitted, woven and non-woven materials such as felts and mats.

The fibres and/or filaments can be of constant transverse cross-sectional configuration along their length or a portion thereof, or the transverse cross-sectional configuration of the fibres and/or filaments can vary along their length randomly or regularly. The transverse cross-sectional configuration at any particular point along the length of a particular fibre or filament can be any appropriate shape, including square, rectangular, triangular, polygonal, circular, oval, ellipsoidal, irregular, any of the above with indentations, any of the above with projections, or an approximation to any of the above.

The fibrous material comprises fibres that are water-absorbent, so that swelling of the fibrous material includes swelling of individual fibres through uptake of the precursor solution into the fibres.

Particularly preferred fibrous material structures, before impregnation with any hydrogel, comprise polymeric fibres capable of swelling in aqueous fluid and have a basis weight of 20 to 300 grams per square metre (gsm), more preferably 20 to 200 gsm and, for wound dressings, more preferably 35 to 180 gsm. The non-impregnated fibrous structure should be capable of absorbing at least 1g of saline per 1g of fibre preferably greater than 2g/g more preferably greater than 5g/g and even more preferably greater than 10g/g.

The fibres, which may be polymeric fibres, may be natural, synthetic or any combination thereof. Preferred types of fibre comprise calcium alginate (available from, for example, Foshan United Medical Technologies Ltd, China), and/or sodium polymethacrylate (available, for example, under the tradename Oasis™ from Technical Absorbents Limited). Optionally, the fibres comprise an alginate, optionally calcium alginate, containing in its polysaccharide chain guluronic and/or mannuronic acid, and optionally with a molar ratio of guluronic to mannuronic acid from 90:10 to 10:90, more preferably from 80:20 to 20:80 and even more preferably from 80:20 to 30:70. A particularly preferred fibre comprises an alginate comprising one or more of the following ions, calcium, sodium, zinc and silver.

The fibrous material structure may be in the form of a layer and/or a non-woven felt, either as a continuous sheet or be perforated, i.e. contain perforations. The fibrous material may contain perforations that have been introduced after formation of the coherent structure of fibres, for example perforations that have been introduced by removing parts of the coherent structure, for example by a stamping using a die. The perforations may be of any shape, for example - but not limited to, circular, square, rectangular, triangular, polygonal, circular, oval, ellipsoidal, irregular, any of the above with indentations, any of the above with projections, or an approximation to any of the above. The side walls of the perforations may be tapered in a straight way, tapered in a curved way, untapered, or any combination thereof at different points along their length. The perforations may include regions along their lengths which define enlarged cavities within the fibrous material structure. The perforations may be interconnected within the fibrous material structure, and such interconnections may comprise passages which may, for example, have tapering side walls which taper in a straight way, tapering side walls which taper in a curved way, untapered side walls, side walls which define enlarged cavities within the fibrous material structure, or any combination thereof at different points along their length.

The size and frequency of the perforations may be varied according to requirements, aesthetic and functional. The transverse cross-sectional area of each perforation as appearing at the surface of the fibrous material may suitably be less than about 9 cm², for example less than about 7 cm², for example less than about 4 cm², for example less than about 1 cm². The transverse cross-sectional area of each perforation as appearing at the surface of the fibrous material may suitably be at least 3 mm², optionally at least 5 mm², optionally at least 1 cm².

The perforations may be provided in a regular array across the fibrous material, which may, for example be in the form of a layer, or may be irregularly provided, or at least one region of perforations may be regular and at least one other region may be irregular. The perforations may define indicia, for example letters, numbers, shapes, logos.

### The Precursor Solution and Polymerisation Method

Preferably, the precursor solution is aqueous. The precursor solution may comprise aqueous solutions of one or more monomers that are ionic, non-ionic, amphoteric, zwitterionic or combinations thereof.

The precursor solution preferably contains one or more monomers capable on polymerisation of forming a three-dimensional matrix of cross-linked polymer molecules.

The expressions "polymer", "polymerisation" and like expressions, used herein, includes within its scope homopolymerisation and copolymerisation and the products thereof.

Optionally, the hydrogel comprises a hydrophilic polymer having multiple pendant sulphonyl groups, optionally with multiple pendant carboxylic groups. Optionally, at least some of the pendant sulphonyl groups are in salt form, for example associated with one or more cations, for example selected from sodium and potassium.

Examples of suitable monomers for use in the present invention include: 2-acrylamido-2-methylpropane sulphonic acid or a substituted derivative thereof or a salt thereof (e.g. an ammonium or alkali metal salt such as sodium, potassium or lithium salts); acrylic acid or a substituted derivative thereof or a salt thereof (e.g. an alkali metal salt such as sodium, potassium or lithium salt); a polyalkylene glycol acrylate or a substituted derivative thereof; a polyalkylene glycol methacrylate or a substituted derivative thereof; acrylic acid (3-sulphopropyl) ester or a substituted derivative thereof or a salt thereof (e.g. an alkali metal salt such as sodium, potassium or lithium salt); diacetone acrylamide (N-1,1-dimethyl-3-oxobutyl-acrylamide); a vinyl lactam (e.g. N-vinyl pyrrolidone or a substituted derivative thereof); an optionally substituted N-alkylated acrylamide such as hydroxyethyl acrylamide; and an optionally substituted N,N-dialkylated acrylamide; and/or N-acryloyl morpholine or a substituted derivative thereof. Preferably, the polymerisable monomer is selected from the 2-acrylamido-2-methylpropane sulphonic acid, which is optionally in salt form, for example associated with one or more cations, for example selected from sodium and potassium; acrylic acid (3-sulphopropyl) ester, which is optionally in salt form, for example associated with one or more cations, for example selected from sodium and potassium; N-acryloyl morpholine; and hydroxyethyl acrylamide.

The hydrogel used in the present invention preferably comprises a plasticised three-dimensional matrix of cross-linked polymer molecules, and has sufficient structural integrity to be self-supporting even at very high levels of internal water content, with sufficient flexibility to conform to the surface contours of mammalian skin or other surface with which it is in contact.

The hydrogel generally comprises, in addition to the cross-linked polymeric network, an aqueous or non-aqueous plasticising medium including an organic plasticiser. This plasticising medium is preferably present in the same precursor solution as the monomer(s), although if desired it may be applied to the fibrous material separately from the monomer(s) but before polymerisation.

The fibrous material in contact with the precursor solution and/or in the composite hydrogel/fibre structure may suitably be in the form of a layer. This layer may suitably be provided for the polymerisation on a surface, most preferably itself provided with a release layer such as siliconised paper of plastic. After polymerisation of such an arrangement, the resultant hydrogel/fibrous composite will be in the form of a sheet having its underside protected by the release layer.

In the material to be polymerised, the precursor solution preferably comprises the monomer(s), cross-linking agent, plasticiser, and optionally water and other ingredients as desired. The polymerisation reaction is preferably a free-radical polymerisation with cross-linking, which may for example be induced by light, heat, radiation (e.g. ionising radiation), or redox catalysts, as is well known.

For example, the free radical polymerisation may be initiated in known manner by light (photoinitiation), particularly ultraviolet light (UV photoinitiation); heat (thermal initiation); electron beam (e-beam initiation); ionising radiation, particularly gamma radiation (gamma initiation); non-ionising radiation, particularly microwave radiation (microwave initiation); or any combination thereof. The precursor solution may include appropriate substances (initiators), at appropriate levels, e.g. up to about 5% by weight, more particularly between about 0.002% and about 2% by weight, which serve to assist the polymerisation and its initiation, in generally known manner.

Preferred photoinitiators include any of the following either alone or in combination:

Type I-α-hydroxy-ketones and benzilidimethyl-ketals e.g. Irgacure 651. These are believed on irradiation to form benzoyl radicals that initiate polymerisation. Photoinitiators of this type that are preferred are those that do not carry substituents in the *para* position of the aromatic ring. Examples include Irgacure184 and Daracur 1173 as marketed by Ciba Chemicals, as well as combinations thereof.

A particularly preferred photoinitiator is 1-hydroxycyclohexyl phenyl ketone; for example, as marketed under the trade name Irgacure 184 by Ciba Speciality Chemicals. Also preferred is Daracur 1173, and mixtures of 1-hydroxycyclohexyl phenyl ketone and 2-hydroxy-2-propyl phenyl ketone, for example mixtures of Irgacure 184 and Daracur 1173.

Photo-polymerisation is particularly suitable, and may be achieved using light, optionally together with other initiators, such as heat and/or ionizing radiation. Photoinitiation will usually be applied by subjecting the pre-gel reaction mixture containing an appropriate photoinitiation agent to ultraviolet (UV) light. The incident UV intensity, at a wavelength in the range from 240 to 420nm, is typically greater than about 10mW/cm². The processing will generally be carried out in a controlled manner involving a precise predetermined sequence of mixing and thermal treatment or history.

The UV irradiation time scale should ideally be less than 60 seconds, and preferably less than 10 seconds to form a gel with better than 95% conversion of the monomers. Those skilled in the art will appreciate that the extent of irradiation will be dependent on a number of factors, including the UV intensity, the type of UV source used, the photoinitiator quantum yield, the amount of monomer(s) present, the nature of the monomer(s) present and the presence of polymerisation inhibitor.

In one preferred embodiment, (on the one hand) the precursor solution in contact with the fibrous material and (on the other hand) the source of the polymerisation initiator (e.g. the radiation source) may move relative to one another for the polymerisation step. In this way, a relatively large amount of polymerisable material can be polymerised in one procedure, more than could be handled in a static system. This moving, or continuous, production system is preferred.

After completion of the polymerisation, the hydrogel/fibrous composite is preferably sterilised in conventional manner. The sterile composite may be used immediately, e.g. to provide a skin-adhesive layer in an article, or a top release layer may be applied to the composite for storage and transportation of the composite.

If desired, certain ingredients of the hydrogel may be added after the polymerisation and optional cross-linking reaction. However, it is generally preferred that substantially all of the final ingredients of the hydrogel are present in the precursor solution, and that - apart from minor conventional conditioning or, in some cases, subsequent modifications caused by the sterilisation procedure - substantially no chemical modification of the hydrogel takes place after completion of the polymerisation reaction.

### Monomers

Optional substituents of the monomers used to prepare the hydrogels used in the present invention may preferably to selected from substituents which are known in the art or are reasonably expected to provide polymerisable monomers which form hydrogel polymers having the properties necessary for the present invention. Suitable substituents include, for example, lower alkyl, hydroxy, halo and amino groups.

Particularly preferred monomers include: the sodium salt of 2-acrylamido-2-methylpropane sulphonic acid, commonly known as NaAMPS, which is available commercially at present from Lubrizol as either a 50% aqueous solution (reference code LZ2405) or a 58% aqueous solution (reference code LZ2405A); acrylic acid (3-sulphopropyl) ester potassium salt, commonly known as SPA or SPAK (SPA or SPAK is available commercially in the form of a pure solid from Raschig); N-acryloyl morpholine; and hydroxyethyl acrylamide.

### Cross-linking Agents

Conventional cross-linking agents are suitably used to provide the necessary mechanical stability and to control the adhesive properties of the hydrogel. The amount of cross-linking agent required will be readily apparent to those skilled in the art such as from about 0.01% to about 0.5%, particularly from about 0.05% to about 0.4%, most particularly from about 0.08% to about 0.3%, by weight of the total polymerisation reaction mixture. Typical cross-linkers include tripropylene glycol diacrylate, ethylene glycol dimethacrylate, triacrylate, polyethylene glycol diacrylate (polyethylene glycol (PEG) molecular weight between about 100 and about 4000, for example PEG400 or PEG600), and methylene bis acrylamide.

### Organic Plasticisers

The one or more organic plasticisers, when present, may suitably comprise any of the following either alone or in combination: at least one polyhydric alcohol (such as glycerol, polyethylene glycol, or sorbitol), at least one ester derived therefrom, at least one polymeric alcohol (such as polyethylene oxide) and/or at least one mono- or poly-alkylated derivative of a polyhydric or polymeric alcohol (such as alkylated polyethylene glycol). Glycerol is the preferred plasticiser. An alternative preferred plasticiser is the ester derived from boric acid and glycerol. When present, the organic plasticiser may comprise up to about 45% by weight of the hydrogel composition.

### Surfactants

Any compatible surfactant may optionally be used as an additional ingredient of the hydrogel composition. Surfactants can lower the surface tension of the mixture before polymerisation and thus aid processing. The surfactant or surfactants may be non-ionic, anionic, zwitterionic or cationic, alone or in any mixture or combination. The surfactant may itself be reactive, i.e. capable of participating in the hydrogel-forming reaction. The total amount of surfactant, if present, is suitably up to about 10% by weight of the hydrogel composition, preferably from about 0.05% to about 4% by weight.

In a preferred embodiment of the invention the surfactant comprises at least one propylene oxide/ethylene oxide block copolymer, for example such as that supplied by BASF Plc under the trade name Pluronic P65 or L64.

### Other additives

The hydrogel in the composite of the present invention may include one or more additional ingredients, which may be added to the pre-polymerisation mixture or the polymerised product, at the choice of the skilled worker. Such additional ingredients may be selected from additives, including, for example, water, organic plasticisers, surfactants, polymeric material (hydrophobic or hydrophilic in nature, including proteins, enzymes, naturally occuring polymers and gums), synthetic polymers with and without pendant carboxylic acids, electrolytes, pH regulators, colorants, chloride sources, bioactive compounds and mixtures thereof. The polymers can be natural polymers (e.g. xanthan gum), synthetic polymers (e.g. polyoxypropylene-polyoxyethylene block copolymer or poly-(methyl vinyl ether *alt* maleic anhydride)), or any combination thereof. "Bioactive compounds" may indicate any compound or mixture included within the hydrogel for some effect it has on living systems, whether the living system be bacteria or other microorganisms or higher animals such as the patient. Bioactive compounds that may be mentioned include, for example, pharmaceutically active compounds, antimicrobial agents, antiseptic agents, antibiotics and any combination thereof. Antimicrobial agents may, for example, include: souces of oxygen and/or iodine (e.g. hydrogen peroxide or a source thereof and/or an iodide salt such as potassium iodide) (see, for example Bioxzyme™ technology, for example in The Sunday Telegraph (UK) 26 January 2003 or the discussion of the Oxyzyme™ system at www.wounds-uk.com/posterabstracts2003.pdf); honey (e.g. active Manuka honey); antimicrobial metals, metal ions and salts, such as, for example, silver-containg antimicrobial agents (e.g. colloidal silver, silver oxide, silver nitrate, silver thiosulphate, silver sulphadiazine, or any combination thereof); or any combination thereof.

Hydrogels incorporating antimicrobial agents may, for example, be active against such organisms as *Staphylococcus aureus* and *Pseudomonas aeruginosa.*

Agents for stimulating the healing of wounds and/or for restricting or preventing scarring may be incorporated into the hydrogel. Examples of such agents include growth factors e.g. from GroPep Ltd, Australia or Procyte, USA (see, e.g. WO-A-96/02270); cell nutrients (see, e.g., WO-A-93/04691); glucose (see, e.g., WO-A-93/10795); an anabolic hormone or hormone mixture such as insulin, triiodothyronine, thyroxine or any combination thereof (see, e.g., WO-A-93/04691); or any combination thereof.

Additional polymer(s), typically rheology modifying polymer(s), may be incorporated into the polymerisation reaction mixture at levels typically up to about 10% by weight of total polymerisation reaction mixture, e.g. from about 0.2% to about 10% by weight. Such polymer(s) may include polyacrylamide, poly-NaAMPS, polyethylene glycol (PEG), polyvinylpyrrolidone (PVP) or carboxymethyl cellulose.

The hydrogel in the composite of the present invention preferably consists essentially of a cross-linked hydrophilic polymer of a hydrophilic monomer and optionally one or more comonomer, together with water and/or one or more organic plasticiser, and optionally together with one or more additives selected from surfactants, polymers, pH regulators, electrolytes, chloride sources, bioactive compounds and mixtures thereof, with less than about 10% by weight of other additives.

For further details of the hydrogel material for use in the present invention, and its preparation, please refer to the following publications: PCT Patent Applications Nos. WO-97/24149, WO-97/34947, WO-00/06214, WO-00/06215, WO-00/07638, WO-00/46319, WO-00/65143 and WO-01/96422.

The water activity, which is related to the osmolarity and the ionic strength of the precursor solution (as measured, for example, by a chilled mirror dewpoint meter, Aqualab T3) is preferably beween 0.05 and 0.99, more preferably between, 0.2 and 0.99, and even more preferably between 0.3 and 0.98. The higher the ionic strength, reflected in a lower water activity, the lesser the swelling of the fibre structure. The ionic strength of the precursor solution can therefore be used to optimise the hydrogel composite properties.

### Impregnation of the Fibrous Maternal

Preferably, the polymerising and crosslinking of the at least one monomer takes place after partial impregnation of the fibrous material. "Partial impregnation", "partially impregnating" and similar expressions herein indicate, for example, that the fibrous material has not absorbed its maximum capacity of precursor solution. In some embodiment, "partial impregnation", "partially impregnating" and similar expressions herein indicate that there is an inhomogenous distribution of the precursor material throughout the fibrous material, and, optionally, at least one part of the fibrous material, for example at least some of the lengths of the fibres of the fibrous material, substantially lack or lacks the aqueous precursor material. "Substantially lacking hydrogel", "non-impregnated fibres" and similar expressions herein may indicate that the amount of hydrogel in and/or on the relevant parts of the fibrous material is 1 g or less of hydrogel per g of fibre of the fibrous material, optionally 0.5 g or less of hydrogel per g of fibre of the fibrous material, optionally 0.2 g or less of hydrogel per g of fibre of the fibrous material, optionally 0.1 g or less of hydrogel per g of fibre of the fibrous material. "Substantially lacking hydrogel", "non-impregnated fibres" and similar expressions herein may indicate that the relevant parts of the fibrous material lack hydrogel. An impregnated fibre may contain at least 1 g of hydrogel per g of fibre of the fibrous material, optionally at least 2 g of hydrogel per g of fibre of the fibrous material, optionally at least 3 g of hydrogel per g of fibre of the fibrous material.

The partial impregnation of the fibre structure may be achieved for example by dipping the fibre structure into a bath of the precursor solution, preferably such that only part of the fibrous structure, e.g. only one face of the fibrous structure, contacts the bath of the precursor solution, or by dispensing the precursor solution from, for example, a slot die onto the fibre structure moving relative to slot die. The precursor solution may be dispensed in a continuous manner to create a substantially continuous coating on the surface of the fibrous material. The resulting material may have one facing surface of non-impregnated fibrous material and an opposite surface of impregnated fibrous material.

The precursor solution may be dispensed in such a manner to create a non-continuous coating, for example in the form of lanes, discrete islands of hydrogel impregnated fibrous material within a substantially continuous array of fibrous material or discrete islands of non-impregnated fibrous material within a substantially continuous array of impregnated fibrous material. The impregnated regions of the fibrous material may fully or partially impregnated with respect to the thickness of the fibrous material.

Alternatively, the precursor solution may be dispensed onto a substrate in a continuous or non-continuous manner and the fibre structure placed on top, using the absorbancy characteristics of the fibre to take up the precursor solution. The resulting material may have one facing surface of non-impregnated fibrous material and an opposite surface of impregnated fibrous material.

Alternatively, the precursor solution (A) may be dispensed onto a substrate and the fibre structure placed on top, using the absorbancy characteristics of the fibre to take up the precursor solution and then by dispensing a precursor solution (B) from, for example, a slot die onto the fibre structure on the upper surface of the fibre structure. The precursor solutions A and B may be of the same or different composition, but both are preferably a precursor solution for forming a hydrogel, optionally a cross-linked hydrogel. The centre (with respect to the thickness of the fibrous material) of the resulting structure may be susbstantially free of impregnated precursor solution.

The length of time between impregnating the fibre and curing (polymerising and optionally crosslinking) the composite may be varied to allow control over the extent of fibre structure impregnation and resultant properties for example fluid uptake and strength of the hydrogel/fibre composite. Preferably, the length of time the precursor solution is in contact with the fibre before curing is between 0.5 and 45 secs, more preferably between 0.5 and 20 seconds, more preferably between 0.5 and 15 seconds, and even more preferably between 0.5 and 10 seconds.

The ratio of fibre to precursor solution is from 1:3 to 1:15, preferably 1:6 to 1:14, more preferably 1:7 to 1:10 and as determined by the weight of fibre per square meter and the amount (weight) of precursor solution incorporated per square meter.

The nature and extent of impregnation of the fibrous material by the precursor solution can thus be varied extensively according to the desired characteristics of the final composite material. For example, there can be a gradient, which can be linear or non-linear or part-linear-part-non-linear, of the amount (e.g. by weight) of the precursor solution taken up per unit volume or unit weight of fibrous material, according to the distance into the bulk of the fibrous material, for example distance from an exposed surface of the hydrogel/fibre composite into the interior of the composite. That gradient may be such that, at any particular region or regions within the fibrous material, the amount of precursor solution per unit volume or unit weight of fibrous material increases or decreases with distance into the bulk of the fibrous material. Alternatively, regions or the whole of the bulk of the fibrous material may be impregnated in such a way that there is a uniform or substantially uniform distribution of the precursor solution through the relavant portion or whole of the bulk of the fibrous material.

In a preferred embodiment of the invention the composite material comprises alternating lanes of hydrogel impregnated fibre and lanes of non-impregnated fibre. The hydrogel impregnated lanes can be fully or partially impregnated with a substantially uniform distribution of the precursor solution. The hydrogel impregnated lanes can be fully or partially impregnated with a gradient distribution of the precursor solution. The width of at least some, optionally all, of the impregnated lanes is preferably greater than 1mm, more preferably greater than 2 mm and preferably less than 10mm and more prefeably less than 8mm. The ratio of the widths of the lanes of impregnated fibre to non-impregnated fibre is preferably less than 5:1 and greater than 1:5, more preferably less than 3:1 and greater than 1:3 and even more preferably less than 2:1 and greater than 1:2.

In another embodiment of the present invention, the hydrogel composite material comprises alternating lanes of hydrogel impregnated fibre and lanes of non-impregnated fibre on one facing surface and alternating lanes of hydrogel impregnated fibre and lanes of non-impregnated fibre on the opposite facing surface such that lanes of impregnated fibrous material on the two opposing faces are substantially in alignment.

In another embodiment of the present invention, the hydrogel composite material comprises alternating lanes of hydrogel impregnated fibre and lanes of non-impregnated fibre on one facing surface and alternating lanes of hydrogel impregnated fibre and lanes of non-impregnated fibre on the opposite facing surface such that lanes of impregnated fibrous material on the two opposing faces are substantially not in alignment. The impregnation of the fibrous material may be such that only a portion of the thickness of the fibrous material on each face is impregnated. The central region within the thickness of the fibrous material may be substantially free of precursor solution or may have zones of precursor solution creating alternating regions of impregnated and non-impregnated fibre within the bulk of the hydrogel composite material.

In another embodiment of the present invention, the hydrogel composite material comprises alternating lanes of hydrogel impregnated fibre and lanes of non-impregnated fibre on one facing surface and a substantially continuous layer of partially hydrogel impregnated fibre on the opposite facing surface. The impregnation of the fibrous material is such that only a portion of the thickness of the fibrous material on each face is impregnated. The central region within the thickness of the fibrous material may be substantially free of precursor solution or may have zones of precursor solution creating alternating regions of impregnated and non-impregnated fibre within the bulk of the hydrogel composite material.

In another embodiment of the present invention, the hydrogel composite material comprises discrete islands of impregnated fibrous material surrounded by a continuous matrix of interconnected non-impregated material. The islands may comprise precursor solution impregnating the complete thickness of the fibrous mateial. The islands may comprise precursor solution impregnating only a partial thickness of the fibrous material or a combination of both. The islands may be dispensed from a robotic dispensing system such as those available from Fisnar, USA. The islands may be of any shape, for example - but not limited to, circular, square, rectangular, triangular, polygonal, circular, oval, ellipsoidal, irregular, any of the above with indentations, any of the above with projections, or an approximation to any of the above. Preferably the islands have a width of a least 2mm more preferably at least 5mm. The edges of an island are preferably at least 2mm from the nearest neighbour more preferably at least 4mm.

In another embodiment of the present invention, the hydrogel composite material comprises discrete islands of non-impregnated fibrous material surrounded by a matrix of interconnected non-impreganted material. The impregnated regions of the fibrous material may comprise the complete thickness of the fibrous material or may comprise precursor solution impregnating only a partial thickness of the fibrous material or a combination of both. The precursor solution may be dispensed from a robotic dispensing system such as those available from Fisnar, USA. The islands may be of any shape, for example - but not limited to, circular, square, rectangular, triangular, polygonal, circular, oval, ellipsoidal, irregular, any of the above with indentations, any of the above with projections, or an approximation to any of the above. Preferably the islands have a width of a least 2mm more preferably at least 5mm. The edges of an island are preferably at least 2mm from the nearest neighbour more preferably at least 4mm.

### Compression or embossing of the hydrogel/fibre composite

As mentioned, in a further embodiment, at least part of the hydrogel/fibre composite structure is compressed. In an embodiment, the hydrogel/fibre composite structure comprises compressed and substantially non-compressed areas. The compressed and substantially non-compressed areas may be present on and/or visible from a surface of the hydrogel/fibre composite structure. In an embodiment, the hydrogel/fibre composite structure comprises a plurality of substantially non-compressed areas in the form of discrete islands, each of which is surrounded by a compressed area. The compressed area may be in the form of a sea having a plurity of islands of non-compressed areas, each of which is surrounded by the sea of compressed area. The method of forming a hydrogel/fibre composite may involve, after partially impregnating fibres of the water-swellable fibrous material with the aqueous hydrogel precursor solution, compressing at least part of the fibrous material, and then polymerising and, optionally, crosslinking the at least one monomer to form the hydrogel within the impregnated fibres of the fibrous material, such that at least some of the hydrogel/fibrous composite is compressed. The present inventors have found that producing a fibre composite with compressed and non-compressed areas has advantages in reducing lateral wicking of fluid.

A compressed area may be a region of the hydrogel/fibre composite in which the fibres have been pressed together, for example by compressing the fibres between two objects. A substantially non-compressed area may be an area that has not be pressed between two objects during formation of the compressed area. In an embodiment, the water-swellable fibrous structure, before compression, is in the form of a sheet of uniform thickness, and after compressing to form the compressed area or areas, the thickness of the fibrous structure in the compressed area(s) is less than that of the sheet of uniform thickness and, if present, the substantially non-compressed areas; and/or if present, the substantially non-compressed areas may have a thickness that is the same as or less than the sheet of uniform thickness. A compressed area may be an area, which, relative to a substantially non-compressed area has a higher density of fibres, e.g. in wt of fibres per cm³ of the fibrous material and/or hydrogel/fibre composite structure or volume of fibre per cm³ of the fibrous material and/or hydrogel/fibre composite structure. One or more compressed areas and one or more substantially non-compressed areas may both be visible from a surface of the composite. If the composite structure is in the form of a sheet, a compressed area may be compressed in a direction perpendicular to a surface of the sheet; and/or if the composite structure is in the form of a sheet, a compressed area may have a depth measured from one opposing surface of the sheet to another that is less than the substantially non-compressed area. In an embodiment, the substantially non-compressed area or areas form a portion or portions that is or are raised above adjacent compressed area or areas.

In an embodiment, the fibrous material, before impregnation with the hydrogel precursor solution, is in the form of a layer having opposing first and second faces, and the hydrogel precursor solution is applied to only the first of two opposing faces, and at least part of one of the faces is compressed, and the polymerisation carried out such that the resultant structure has a first face of fibres impregnated with hydrogel and the opposing second face having a lower amount of hydrogel (in weight of hydrogel per unit weight of water-swellable fibres) impregnated into the fibres compared to the first face, and at least part of one of the faces is compressed.

In an embodiment, the fibrous material, before impregnation with the hydrogel precursor solution, is in the form of a layer having opposing first and second faces, and the hydrogel precursor solution is applied to only the first of two opposing faces, and at least part of the second face is compressed, and the polymerisation carried out such that the resultant structure has a first face of fibres impregnated with hydrogel and the opposing second face having a lower amount of hydrogel (in weight of hydrogel per unit weight of water-swellable fibres) impregnated into the fibres compared to the first face, and at least part of the second face is compressed.

In an embodiment, the fibrous material, before impregnation with the hydrogel precursor solution, is in the form of a layer having opposing first and second faces, and the hydrogel precursor solution is applied to only the first of two opposing faces, and at least part of the second face is compressed, and the polymerisation carried out such that the resultant structure has a first face of fibres impregnated with hydrogel and the opposing second face having a lower amount of hydrogel (in weight of hydrogel per unit weight of water-swellable fibres) impregnated into the fibres compared to the first face, and the second face has compressed and substantially non-compressed areas. Preferably the second face comprises a plurality of substantially non-compressed areas in the form of discrete islands, each of which is surrounded by a compressed area. Preferably, the second face comprises a plurality of substantially non-compressed areas, wherein the plurality of substantially non-compressed areas are in the form of discrete islands, and at least some, in some embodiments all, of the remaining area between the islands is compressed area.

In further embodiment, it has been surprisingly found that by partially impregnating on face of the fibre and the non impregnated face of the fibre being embossed, for example so that separate discrete substantially non-compressed areas are formed with the balance of the fibre being substantially compressed, for example in a substantially continuous inter connected manner, the lateral wicking of fluid is reduced. It has been found that if the embossing or compression process is undertaken prior to the curing, of the partially impregnated fibre gel composite, for example by polymerizing and, optionally crosslinking, the at least one monomer, then the embossed pattern is permanently retained. If the embossing process is undertaken after the curing of the partially impregnated fibre gel composite then the embossed pattern is not generally retained.

The embossed fibre surface may be produced by, or the compression of the fibrous material carried out by, any method known to those skilled in the art. However, the compression or embossing is preferably achieved by using a weighted roller which has protrusions on its circumference, the protrusions forming, in the fibrous material and/or hydrogel/fibre composite structure, the compressed area. In a preferred embodiment, the protrusions are such that they produce continuous inter connected areas of substantially compressed fibre, preferably with discrete islands of substantially non-compressed areas surrounded by the compressed fibres or areas.

Any pattern may be used for the embossing or compression, but preferably the pattern is such that separate discrete substantially non-compressed are formed with the balance of the fibrous material being compressed, preferably in a substantially continuous inter connected manner.

The compressed areas and substantially non-compressed areas may be of any shape, for example when viewed from above a surface of the composite structure and/or fibrous material. In an embodiment, the substantially non-compressed areas are in the form of islands having a shape, each of the islands surrounded by a compressed area, wherein the shape is selected from a regular shape, including, but not limited to, a regular shape having n sides, where n is at least 3, optionally at least 4, optionally at least 5, optionally at least 6. In some examples, the regular shape is selected from a circle, a triangle, a rectangle, a square, a rhombus, a pentagon and a hexagon. In an embodiment, the substantially non-compressed areas are each in the form of a regular shape, for example as viewed from a surface of the composite, and each substantially non-compressed area is surrounded by compressed area. In an embodiment, the substantially non-compressed areas are each in the form of a regular shape, and a sea of compressed area is present that surrounds the substantially non-compressed area. Preferably the embossing or compression imparts a rhombic or hexagonal pattern onto the fibrous structure and/or hydrogel/fibre composite structure. In an embodiment, the substantially non-compressed areas are each in the form of a regular shape, e.g. a hexagon, and they form an array, and each of the regular shapes of substantially non-compressed area is surrounded by compressed area, the compressed areas around each regular shape being interconnected with one another. In an embodiment, the substantially non-compressed areas are each in the form of a regular shape, e.g. a hexagon, and they form an array, and each of the regular shapes of substantially non-compressed area is surrounded by compressed area, and the array has a symmetry selected from p6m, cmm, pgg, and p2 hexagonal symmetries. An example array 100 of hexagons is shown in figure 1. This can represent the pattern of embossed and non-embossed areas on a surface of the hydrogel/fibre composite. For example, in an embodiment, the areas 101 in the form of hexagons are substantially non-compressed areas, each of which is surrounded by compressed area 102. Such a pattern may be formed, for example, by a compression plate compressing the water-swellable fibrous material, preferably after impregnation with the aqueous hydrogel precursor solution and before polymerization; wherein the compression plate has raised portions and non-raised portions, the non-raised portions corresponding to the substantially non-compressed area and the raised portions corresponding to the compressed areas.

In an embodiment, the compression of or embossing a hexagonal pattern comprises regular (p6m) or stretched (cmm), pgg or p2 hexagonal symmetries or any combination thereof.

The substantially non-compressed areas, which are preferably separate from one another and discrete, preferably have an individual area, measured across a surface of the composite structure or fibrous material, greater than 0.3 cm², more preferably greater than 0.5 cm² and preferably less than 40 cm² and more preferably less than 30 cm² and even more preferably less than 10 cm².

The total percentage area across a surface of the fibrous material and/or the hydrogel/fibre composite occupied by substantially non-compressed area or areas is preferably at least 40%, more preferably at least 50% and even more preferably at least 60%, with optionally the remaining percentage area being the compressed area. The total percentage area across a surface of the fibrous material and/or the hydrogel/fibre composite of embossed fibre comprising separate discrete substantially non-compressed area is preferably 90% or less, more preferably 80% or less and even more preferably 60% or less, with optionally the remaining percentage area being the compressed area.

Preferably the compressed areas are still substantially fibrous in nature i.e. the gel has not completely impregnated the compressed areas and/or the fibres in the compressed area or areas substantially lack hydrogel. Preferably the substantially non-compressed areas are still substantially fibrous in nature i.e. the gel has not completely impregnated the substantially non-compressed areas and/or the fibres in the substantially non-compressed area or areas substantially lack hydrogel. Preferably, the range of height ratio of compressed fibre in a compressed area to substantially non-compressed fiber in a substantially non-compressed area is at least from 1:1.5 to 1:10 more preferably at least 1:2 to 1:8, with, for example, the height being measured from an opposing surface, preferably a substantially non-embossed and/or planar surface, of the hydrogel/fibre composite through the composite to the surface of the fibres in the compressed or substantially non-compressed area.

### Articles and Applications

The hydrogel present in the composites described herein may be adhesive or non-adhesive. When they are adhesive, they are typically tacky to the touch, and therefore lend themselves to applications where a certain degree of adhesion to mammalian (particularly human) skin is required. When the hydrogel composites described herein are non-adhesive, they typically have no or negligible tackiness to the touch.

Adhesive hydrogel composites according to the present invention may preferably be capable of being removed from the skin without undue pain, discomfort or irritation, and without leaving a substantial mark or residue on the skin.

The composites may thus suitably be used in a range of skin contact or covering articles and applications where the composite is brought into contact either with skin or with an intermediary member which interfaces between the composite and the skin. The composite may be unsupported or may be supported on a part of a larger article for some specific use, e.g. a backing structure. The composites may suitably be in the form of sheets, coatings, membranes or laminates.

Articles and applications include patches, tapes, bandages, devices and dressings of general utility or for specific uses, including without limitation biomedical, skin care, personal and body care, palliative and veterinary uses such as, for example, skin electrodes for diagnostic (e.g. ECG), stimulation (e.g. TENS), therapeutic (e.g. defibrillation) or electrosurgical (e.g. electrocauterisation) use; dressings and reservoirs for assisting wound and burn healing, wound and burn management, skin cooling, skin moisturizing, skin warming, aroma release or delivery, decongestant release or delivery, pharmaceutical and drug release or delivery, perfume release or delivery, fragrance release or delivery, scent release or delivery, and other skin contacting devices such as absorbent pads or patches for absorbing body fluids (e.g. lactation pads for nursing mothers), cosmetic device adhesives, hairpiece adhesives and clothing adhesives; and adhesive flanges and tabs for fecal collection receptacles, ostomy devices and other incontinence devices.

The articles incorporating the hydrogel composites according to the present invention may have any convenient shape or configuration. Particularly but not exclusively, the articles may be provided in any conventional shape or configuration for the category of articles concerned, or any approximation thereto. For example, articles in substantially sheet form may be square, rectangular, triangular, polygonal, circular, oval, ellipsoidal, irregular, any of the above with indentations, any of the above with projections, or an approximation to any of the above.

The articles incorporating the hydrogel composites according to the present invention may incorporate the said composite as an island surrounded by other portions of that or those face(s) of the article of which the hydrogel composite forms part, or the said composite may extend to one or more edge of such face(s). Where the hydrogel composite is an island surrounded by other portions of that or those face(s) of the article of which the hydrogel composite forms part, the surrounding portions may be provided with other adhesive materials such as conventional pressure sensitive adhesives, such as, for example, acrylate ester adhesives, silicone adhesives, hydrogel adhesives, polyurethane adhesives e.g. to provide skin adhesion.

Articles such as, for example, patches, tapes, bandages, devices, dressings of general utility or for specific uses, including without limitation biomedical, skin care, personal and body care, palliative and veterinary uses such as, for example, dressings and reservoirs for assisting wound and burn healing, wound and burn management, skin cooling, skin moisturizing, skin warming, aroma release or delivery, decongestant release or delivery, pharmaceutical and drug release or delivery, perfume release or delivery, fragrance release or delivery, scent release or delivery, and other skin contacting devices such as absorbent pads or patches for absorbing body fluids (e.g. lactation pads for nursing mothers), cosmetic device adhesives, hairpiece adhesives and clothing adhesives; and adhesive flanges and tabs for fecal collection receptacles, ostomy devices and other incontinence devices may suitably comprise a support member, typically in sheet or substantially sheet form, which is suitably flexible, conformable to the skin, with which the hydrogel composite according to the present invention is associated, for example with which the hydrogel composite according to the present invention is in contact. The support member may be perforated or non-perforated. The support member may be unitary in construction or constructed as a composite of multiple parts, e.g. a plurality of layers. The construction of the parts other than the hydrogel composite of the present invention may suitably be generally conventional. For example, the support member of a wound dressing or the like may suitably comprise a flexible water-permeable or water-impermeable backing layer or other structure, which may optionally incorporate other adhesives if desired, and/or an absorbent layer or other structure (e.g. a foam or other absorbent material). Such additional parts may suitably be formed in any suitable material conventionally used for such articles, including for example synthetic and natural materials, e.g. polymers such as polyurethane, polyolefins, hydrogels, or any combination thereof.

Articles comprising multiple parts - e.g. layers or sheets - may suitably include adhesives (e.g. acrylic adhesives) to bond the parts together, or the parts may be retained together in the article by partial melting together, by crimping, embossing or other mechanical retention method, or any combination thereof.

If desired, a part of an article or a complete article, such as a skin patch, wound or burn dressing, bandage or plaster can incorporate a system for generating an bioactive agent such as a pharmaceutically active agent or combination of agents (drug), an antimicrobial agent or combination of agents, an antiseptic agent or combination of agents, or an antibiotic agent or combination of agents. Such a system may, for example, be the Bioxzyme™ system mentioned above.

Parts of the articles which are adapted to contact a patient during use, and at least those portions of the article adjacent to the patient-contacting parts, may if desired be sterilised and may conveniently be stored in sterile packaging.

The hydrogel composites according to the present invention, and articles incorporating them, are suitably provided for storage, transportation and before use with a release sheet overlying any adhesive portions. The release sheet may take any conventional form, e.g. a paper or plastics sheet which may suitably be coated with a non-stick material such as silicone or polytetrafluoroethylene.

If desired, other portions of the articles may also suitably be provided for storage, transportation and before use with a release sheet overlying any other portions. The release sheet may take any conventional form, e.g. a paper or plastics sheet which may suitably be coated with a non-stick material such as silicone or polytetrafluoroethylene. For example, a surface of an article such as skin dressing which in use is directed away from the wearer's skin may if desired be provided with a surface or surface material that benefits from protection before use. In that case, for example, the said surface or surface material can be protected for storage and transportation before use by the release layer, which can then be removed and discarded after the article has been applied to the wearer's skin.

### Examples

The following non-limiting examples are provided as further illustration of the present invention, but without limitation.

In all the examples below absorbencies WA and WW were determined by the Free Swell Absorption Capacity method, Test methods for primary wound dressings - Part 1: Aspects of absorbency, PN-EN 13726-1:2005 [1]. Moisture Vapour Transmission Rate (MVTR) was determined by Test methods for primary wound dressings - Part 2: Moisture vapour transmission rate of permeable film dressings" PN EN 13726-2:2005 [2], Moisture vapour transmission rate of a wound dressing when in contact with a liquid.

### Example 1

A precursor solution comprised 68.5 parts by weight of 58% aqueous solution of the Sodium salt of acrylamidomethylpropanesulphonic acid (NaAMPS, LZ2405 Lubrizol), 1 part carboxymethyl cellulose and 0.5 parts acrylic acid (3-sulphopropyl) ester potassium salt (Raschig), 30 parts glycerol, Precursor solution A. 0.14 parts of a 1 to 10 (by weight) mixture of Daracure 1173 photoinitiator (Ciba Speciality Chemicals) and IRR280 cross-linker (PEG400 diacrylate, UCB Chemicals) was added to 100 parts of precursor solution A to make precursor solution B.

Calcium alginate fibre, (50% mannuronic acid, 50% guluronic acid)100gsm, 250mm width, (Foshan United Medical Technologies Ltd, China) was passed at a speed of 7m/minute under a slot die connected to a reservoir of precursor solution B via a peristaltic pump. The pump speed was adjusted so that circa 0.8kg/m2 of precursor solution was delivered onto the fibre. The time of impregnation before being cured with medium pressure mercury arc lamps (GEW) was circa 8.5 seconds. The face of the fibrous opposite to the face on which the precursor solution was deposited was not impregnated i.e. it still retained the fibrous feel and texture of the starting fibrous material. The resulting composite had absorbencies WA and WW, of 51g/100cm2 and 5.1g/g. The ratio WA: WW was 10:1. The hydrogel to fiber weight ratio was circa 8:1.

### Example 2

A precursor solution comprised 68.5 parts by weight of 58% aqueous solution of the Sodium salt of acrylamidomethylpropanesulphonic acid (NaAMPS, LZ2405 Lubrizol), 1 part carboxymethyl cellulose and 0.5 parts acrylic acid (3-sulphopropyl) ester potassium salt (Raschig), 30 parts glycerol, Precursor solution A. 0.14 parts of a 1 to 10 (by weight) mixture of Daracure 1173 photoinitiator (Ciba Speciality Chemicals) and IRR280 cross-linker (PEG400 diacrylate, UCB Chemicals) was added to 100 parts of precursor solution A to make precursor solution B.

Calcium alginate fibre, (50% mannuronic acid, 50% guluronic acid)100gsm, 250mm width, (Foshan United Medical Technologies Ltd, China) was passed at a speed of 7m/minute under a first slot die, with a shim cut to produce circa 8mm lanes of impregnated fibre alternating with circa 4mm lanes of non-impregnated fibre, connected to a reservoir of precursor solution B via a first peristaltic pump. The pump speed was adjusted so that circa 0.36kg/m2 of precursor solution was delivered onto the fibre and passes under a second slot die, with a shim cut to produce circa 8mm lanes of impregnated fibre alternating with circa 4mm lanes of non-impregnated fibre, in direct alignment with the lanes produced from the first slot die, connected to a reservoir of precursor solution B via a second peristaltic pump. The speed of the second pump was adjusted so that circa 0.36kg/m2 of precursor solution was delivered onto the fibre. The time of impregnation from the first slot die to the second was circa 4 seconds and from the second slot die before being cured with medium pressure mercury arc lamps (GEW) was circa 4 seconds. The resulting composite had lanes of impregnated fibre whereby the impregnation was through the thickness of the fibrous material. The resulting composite had absorbencies WA and WW, of 38g/100cm2 and 4.6/g. The ratio WA: WW was 8.3:1. The hydrogel to fiber weight ratio was circa 7.2:1.

### Example 3

A precursor solution comprised 68.5 parts by weight of 58% aqueous solution of the Sodium salt of acrylamidomethylpropanesulphonic acid (NaAMPS, LZ2405 Lubrizol), 1 part carboxymethyl cellulose and 0.5 parts acrylic acid (3-sulphopropyl) ester potassium salt (Raschig), 30 parts glycerol, Precursor solution A. 0.14 parts of a 1 to 10 (by weight) mixture of Daracure 1173 photoinitiator (Ciba Speciality Chemicals) and IRR280 cross-linker (PEG400 diacrylate, UCB Chemicals) was added to 100 parts of precursor solution A to make precursor solution B.

Calcium alginate fibre, (50% mannuronic acid, 50% guluronic acid) 100gsm, 250mm width, (Foshan United Medical Technologies Ltd, China) was passed at a speed of 7m/minute under a first slot die, with a shim cut to produce alternating 8mm lanes, connected to a reservoir of precursor solution B via a first peristaltic pump. The pump speed was adjusted so that circa 0.18kg/m2 of precursor solution was delivered onto the fibre and passed under a second slot die, with a shim cut to produce alternating 8mm lanes in direct alignment with the lanes from the first slot die, connected to a reservoir of precursor solution B via a second peristaltic pump. The speed of the second pump was adjusted so that circa 0.18kg/m2 of precursor solution was delivered onto the fibre. The time of impregnation from the first slot die to the second slot die was circa 4 seconds and from the second slot die before being cured with medium pressure mercury arc lamps (GEW) was circa 4 seconds. The resulting composite had absorbencies WA and WW, of 43g/100cm2 and 9.6/g. The ratio WA:WW was 4.5:1. The hydrogel to fiber weight ratio was circa 3.5:1.

### Example 4

A precursor solution comprised 68.5 parts by weight of 58% aqueous solution of the Sodium salt of acrylamidomethylpropanesulphonic acid (NaAMPS, LZ2405 Lubrizol), 1 part carboxymethyl cellulose and 0.5 parts acrylic acid (3-sulphopropyl) ester potassium salt (Raschig), 30 parts glycerol, Precursor solution A. 0.14 parts of a 1 to 10 (by weight) mixture of Daracure 1173 photoinitiator (Ciba Speciality Chemicals) and IRR280 cross-linker (PEG400 diacrylate, UCB Chemicals) was added to 100 parts of precursor solution A to make precursor solution B.

Siliconised paper was passed at a speed of 6m/minute under a first slot die connected to a reservoir of precursor solution B via a first peristaltic pump. The pump speed was adjusted so that circa 0.38kg/m2 of precursor solution was delivered. Calcium alginate fibre, (50% mannuronic acid, 50% guluronic acid) 100gsm, 250mm width, (Foshan United Medical Technologies Ltd, China) was laid onto, at a speed of 6m/minute, the precursor solution delivered from the first slot die and then passed under a second slot die connected to a reservoir of precursor solution B via a second peristaltic pump. The pump speed was adjusted so that circa 0.38/m2 of precursor solution was delivered onto the fibre. The time of impregnation from the first slot die to the second slot die was circa 4 seconds and from the second slot die before being cured with medium pressure mercury arc lamps (GEW) was circa 4 seconds. The resulting composite had absorbencies WA and WW, of 55g/100cm2 and 4.9g/g. The ratio WA:WW was 11.2:1. The hydrogel to fiber weight ratio was circa 7.6:1.

### Example 5

The data below compares the absorption data (WA:WW) for some commercially available fibre and hydrogel wound dressings with those of the present invention.

| Sample | WA:WW |
|---|---|
| Aquacel (Convatec) | 0.9 |
| Aquacel Extra (Convatec) | 1,9 |
| UMT Alginate (50/50) | 0.75 |
| ActiformCool (Activa) | 17:1 |
| Example 1 | 10:1 |
| Example 2 | 8.7:1 |
| Example 3 | 4.5:1 |
| Example 4 | 7.6:1 |

### Example 6

A precursor solution comprised 68.5 parts by weight of 58% aqueous solution of the Sodium salt of acrylamidomethylpropanesulphonic acid (NaAMPS, LZ2405 Lubrizol), 1 part carboxymethyl cellulose and 0.5 parts acrylic acid (3-sulphopropyl) ester potassium salt (Raschig), 30 parts glycerol, Precursor solution A. 0.14 parts of a 1 to 10 (by weight) mixture of Daracure 1173 photoinitiator (Ciba Speciality Chemicals) and IRR280 cross-linker (PEG400 diacrylate, UCB Chemicals) was added to 100 parts of precursor solution A to make precursor solution B.

Calcium alginate fibre, (50% mannuronic acid, 50% guluronic acid) 100gsm, 250mm width, (Foshan United Medical Technologies Ltd, China) was passed at a speed of 7m/minute under a first slot die, with a shim cut to produce alternating 8mm lanes, connected to a reservoir of precursor solution B via a first peristaltic pump. The pump speed was adjusted so that circa 0.35kg/m2 of precursor solution was delivered onto the fibre and then passed under a second slot die, with a shim cut to produce alternating 8mm lanes in direct alignment with the lanes from the first slot die, connected to a reservoir of precursor solution B via a second peristaltic pump. The speed of the second pump was adjusted so that circa 0.35kg/m2 of precursor solution was delivered onto the fibre. The time of impregnation from the first slot die to the second slot die was circa 4 seconds and from the second slot die before being cured with medium pressure mercury arc lamps (GEW) was circa 4 seconds. The resulting composite had absorbencies WA and WW, of 50.4g/100cm2 and 6.3g/g. The ratio WA:WW was 8:1. The hydrogel to fiber weight ratio was circa 7:1. The MVTR was 9260 g/sq.cm/24hr.

### Example 7

A precursor solution comprised 68.5 parts by weight of 58% aqueous solution of the Sodium salt of acrylamidomethylpropanesulphonic acid (NaAMPS, LZ2405 Lubrizol), 1 part carboxymethyl cellulose and 0.5 parts acrylic acid (3-sulphopropyl) ester potassium salt (Raschig), 30 parts glycerol, Precursor solution A. 0.14 parts of a 1 to 10 (by weight) mixture of Daracure 1173 photoinitiator (Ciba Speciality Chemicals) and IRR280 cross-linker (PEG400 diacrylate, UCB Chemicals) was added to 100 parts of precursor solution A to make precursor solution B.

Calcium alginate fibre, (50% mannuronic acid, 50% guluronic acid) 100gsm, 250mm width, (Foshan United Medical Technologies Ltd, China) was passed at a speed of 7m/minute under a slot die connected to a reservoir of precursor solution B via a peristaltic pump. The pump speed was adjusted so that circa 0.85kg/m2 of precursor solution was delivered onto the fibre. The time of impregnation before being cured with medium pressure mercury arc lamps (GEW) was circa 8.5 seconds. The face of the fibrous opposite to the face on which the precursor solution was deposited was not impregnated i.e. it still retained the fibrous feel and texture of the starting fibrous material. The resulting composite had absorbencies WA and WW, of 48.5g/100cm2 and 5.1g/g. The ratio WA:WW was 9.5:1. The hydrogel to fiber weight ratio was circa 8.6:1. The MVTR was 6190 g/sq.cm/24hr.

The following further non-limiting examples are provided as further illustration of the present invention in which parts of the hydrogel composites are compressed, but without limitation.

### Example 8

An embossed partially impregnated fibre, hydrogel composite with a hydrophilic polyurethane film backing was produced as follows.

A precursor solution comprised 68.5 parts by weight of 58% aqueous solution of the Sodium salt of acrylamidomethylpropanesulphonic acid (NaAMPS, LZ2405 Lubrizol), 1 part carboxymethyl cellulose and 0.5 parts acrylic acid (3-sulphopropyl) ester potassium salt (Raschig), 30 parts glycerol, Precursor solution A. 0.14 parts of a 1 to 10 (by weight) mixture of Daracure 1173 photoinitiator (Ciba Speciality Chemicals) and IRR280 cross-linker (PEG400 diacrylate, UCB Chemicals) was added to 100 parts of precursor solution A to make precursor solution B.

A hydrophilic polyurethane film (Inspire 2408, Exopack Ltd) was passed at a speed of 7m/minute under a slot die connected to a reservoir of precursor solution B via a peristaltic pump. The pump speed was adjusted so that circa 0.8 kg/m2 of precursor solution was delivered onto the film. Calcium alginate fibre, (50% mannuronic acid, 50% guluronic acid)100gsm, 250mm width, (Foshan United Medical Technologies Ltd, China) was then laid down on top of this uncured precursor solution and then passed under a roller to assist with the partial impregnation of the fibre by the precursor solution. The roller was encased in a flexographic print plate which comprised a continuous array of hexagonal protrusions to produce an embossed pattern of continuous compressed partially impregnated fibre (each side of the hexagonal shape circa 1.5mm in width, 5mm in length with islands of substantially non-compressed partially impregnated fibre (circa 10mm in length and width). The pattern 100 on the print plate and in the compressed composite was much as illustrated schematically in Figure 1. The flexographic print plate had raised straight walls 102 arranged to form the edges of hexagons in an array with p6 symmetry. The hexagonal areas 101, which were enclosed by the six straight walls 102, were not raised on the print plate. The final composite formed from this pattern had non-compressed areas in the form of hexagonal islands 101, each of which was surrounded on all sides by compressed areas 102. The embossed composite was then passed under medium pressure mercury arc lamps to cure the embossed, partially impregnated alginate composite. The roller weighed 4.15kg, a length of 326mm and a diameter of 79mm. The embossed face of the fibre opposite to the face which was laid onto the precursor solution was not impregnated i.e. it still retained the fibrous feel and texture of the starting fibrous material. The height ratio of non-impregnated compressed fibre to non-impregnated substantially non-compressed fiber ranged from 1:2 to 1:5. The individual areas were greater than of discrete islands of substantially non -compressed partially impregnated fibre were greater than 0.4cm2. The resulting composite had absorbencies WA and WW, of circa 36.5g/100cm2 and 4g/g. The ratio WA:WW was circa 9:1. The hydrogel to fiber weight ratio was for the partially impregnated fiber, circa 8:1. The extent of spreading of 2ml of Solution A was circa 32 cm2.

### Example 9

A compressed partially impregnated fibre, hydrogel composite with a hydrophilic polyurethane film backing was produced as follows.

A precursor solution comprised 68.5 parts by weight of 58% aqueous solution of the Sodium salt of acrylamidomethylpropanesulphonic acid (NaAMPS, LZ2405 Lubrizol), 1 part carboxymethyl cellulose and 0.5 parts acrylic acid (3-sulphopropyl) ester potassium salt (Raschig), 30 parts glycerol, Precursor solution A. 0.14 parts of a 1 to 10 (by weight) mixture of Daracure 1173 photoinitiator (Ciba Speciality Chemicals) and IRR280 cross-linker (PEG400 diacrylate, UCB Chemicals) was added to 100 parts of precursor solution A to make precursor solution B.

A hydrophilic polyurethane film (Inspire 2408, Exopack Ltd) was passed at a speed of 7m/minute under a slot die connected to a reservoir of precursor solution B via a peristaltic pump. The pump speed was adjusted so that circa 0.8 kg/m2 of precursor solution was delivered onto the film. Calcium alginate fibre, (50% mannuronic acid, 50% guluronic acid) 100gsm, 250mm width, (Foshan United Medical Technologies Ltd, China) was then laid down on top of this uncured precursor solution and then passed under a roller to assist with the partial impregnation of the fibre by the precursor solution. The compressed composite was then passed under medium pressure mercury arc lamps to cure the embossed, partially impregnated alginate composite. The roller weighed 4.15kg, a length of 326mm and a diameter of 79mm. The compressed face of the fibre opposite to the face which was laid onto the precursor solution was not impregnated i.e. it still retained the fibrous feel and texture of the starting fibrous material. The height ratio of non-impregnated compressed fibre to non-impregnated substantially non-compressed fibre ranged from 1:2 to 1:5. The individual areas were greater than of discrete islands of substantially non- compressed partially impregnated fibre were greater than 0.4cm2. The resulting composite had absorbencies WA and WW, of circa 27g/100cm2 and 2.7g/g. The ratio WA:WW was circa 10:1. The hydrogel to fiber weight ratio was for the partially impregnated fiber, circa 8:1. The extent of spreading of 2ml of Solution A was 46 cm2.

### Example 10

An embossed partially imprenated fibre, hydrogel composite with a hydrophilic polyurethane film backing was produced as follows.

A precursor solution comprised 68.5 parts by weight of 58% aqueous solution of the Sodium salt of acrylamidomethylpropanesulphonic acid (NaAMPS, LZ2405 Lubrizol), 1 part carboxymethyl cellulose and 0.5 parts acrylic acid (3-sulphopropyl) ester potassium salt (Raschig), 30 parts glycerol, Precursor solution A. 0.14 parts of a 1 to 10 (by weight) mixture of Daracure 1173 photoinitiator (Ciba Speciality Chemicals) and IRR280 cross-linker (PEG400 diacrylate, UCB Chemicals) was added to 100 parts of precursor solution A to make precursor solution B.

A hydrophilic polyurethane film (Inspire 2408, Exopack Ltd) was passed at a speed of 7m/minute under a slot die connected to a reservoir of precursor solution B via a peristaltic pump. The pump speed was adjusted so that circa 0.9 kg/m2 of precursor solution was delivered onto the film and cured with a medium pressure mercury arc lamps (GEW) and then passed under a second slot die connected to a reservoir of precursor solution B such that circa 0.5 kg/m2 of precursor solution was delivered onto the previously cured gel. Calcium alginate fibre, (50% mannuronic acid, 50% guluronic acid) 100gsm, 250mm width, (Foshan United Medical Technologies Ltd, China) was then laid down on top of this uncured precursor solution and then passed under a roller (as in example 8) to assist with the partial impregnation of the fibre by the precursor solution. The embossed composite was then passed under medium pressure mercury arc lamps to cure the embossed, partially impregnated alginate composite. The embossed face of the fibre opposite to the face which was laid onto the precursor solution was not impregnated i.e. it still retained the fibrous feel and texture of the starting fibrous material. The height ratio of non-impregnated compressed fibre to non-impregnated substantially non-compressed fibre ranged from 1:2 to 1:5. The individual areas were greater than of discrete islands of substantially non-compressed partially impregnated fibre were greater than 0.4cm2. The resulting composite had absorbencies WA and WW, of 39g/100cm2 and 2.8/g. The ratio WA:WW was circa 14:1. The hydrogel to fiber weight ratio was for the partially impregnated fiber circa 5:1. The extent of spreading of 2ml of Solution A was 16 cm2.

### Example 11

An embossed partially impregnated fibre, hydrogel foam composite was produced as follows.

A precursor solution comprised 68.5 parts by weight of 58% aqueous solution of the Sodium salt of acrylamidomethylpropanesulphonic acid (NaAMPS, LZ2405 Lubrizol), 1 part carboxymethyl cellulose and 0.5 parts acrylic acid (3-sulphopropyl) ester potassium salt (Raschig), 30 parts glycerol, Precursor solution A. 0.14 parts of a 1 to 10 (by weight) mixture of Daracure 1173 photoinitiator (Ciba Speciality Chemicals) and IRR280 cross-linker (PEG400 diacrylate, UCB Chemicals) was added to 100 parts of precursor solution A to make precursor solution B.

A hydrophilic polyurethane foam (1.5mm thick, mm wide, Polymer Health Technologies Ltd, UK) was passed at a speed of 7m/minute under a slot die connected to a reservoir of precursor solution B via a peristaltic pump. The pump speed was adjusted so that circa 0.9 kg/m2 of precursor solution was delivered onto the foam. Calcium alginate fibre, (50% mannuronic acid, 50% guluronic acid)100gsm, 250mm width, (Foshan United Medical Technologies Ltd, China) was then laid down on top of this uncured precursor solution and then passed under a roller to assist with the partial impregnation of the fibre by the precursor solution. The roller comprised a continuous array of hexagonal protrusions as in Example 8, to produce an embossed pattern of continuous compressed partially impregnated fibre with islands of substantially non- compressed partially impregnated fibre. The embossed composite was then passed under medium pressure mercury arc lamps to cure the embossed, partially impregnated alginate composite. The roller weighed 4.15kg, a length of 326mm and a diameter of 79mm. The embossed face of the fibre opposite to the face which was laid onto the precursor solution was not impregnated i.e. it still retained the fibrous feel and texture of the starting fibrous material. The height ratio of non-impregnated compressed fibre to non-impregnated substantially non-compressed fibre ranged from 1:2 to 1:5. The individual areas were greater than of discrete islands of substantially non-compressed partially impregnated fibre were greater than 0.4cm2. The resulting composite had absorbencies WA and WW, of circa 62g/100cm2 and 6g/g. The ratio WA:WW was circa 10:1. The hydrogel to fiber weight ratio was for the partially impregnated fiber circa 9:1. The extent of spreading of 2ml of Solution A was 13 cm2. The resulting composite may be used as a wound dressing with either of the opposing outer faces in contact with the wound.

### Example 12

An embossed partially impregnated fibre, hydrogel partially impregnated fibre composite was produced as follows.

A precursor solution comprised 68.5 parts by weight of 58% aqueous solution of the Sodium salt of acrylamidomethylpropanesulphonic acid (NaAMPS, LZ2405 Lubrizol), 1 part carboxymethyl cellulose and 0.5 parts acrylic acid (3-sulphopropyl) ester potassium salt (Raschig), 30 parts glycerol, Precursor solution A. 0.14 parts of a 1 to 10 (by weight) mixture of Daracure 1173 photoinitiator (Ciba Speciality Chemicals) and IRR280 cross-linker (PEG400 diacrylate, UCB Chemicals) was added to 100 parts of precursor solution A to make precursor solution B.

Calcium alginate fibre, (50% mannuronic acid, 50% guluronic acid) 100gsm, 250mm width, (Foshan United Medical Technologies Ltd, China) was passed at a speed of 7m/minute under a slot die connected to a reservoir of precursor solution B via a peristaltic pump. The pump speed was adjusted so that circa 0.9 kg/m2 of precursor solution was delivered onto the fibre. Calcium alginate fibre, (50% mannuronic acid, 50% guluronic acid) 100gsm, 250mm width, (Foshan United Medical Technologies Ltd, China) was then laid down on top of this uncured precursor solution and then passed under a roller to assist with the partial impregnation of the fibre by the precursor solution. The roller comprised a continuous array of hexagonal protrusions as in Example 8, to produce an embossed pattern of continuous compressed partially impregnated fibre with islands of substantially non- compressed partially impregnated fibre. The embossed composite was then passed under medium pressure mercury arc lamps to cure the embossed, partially impregnated alginate composite. The roller weighed 4.15kg, a length of 326mm and a diameter of 79mm. The embossed face of the fibre opposite to the face which was laid onto the precursor solution was not impregnated i.e. it still retained the fibrous feel and texture of the starting fibrous material. The resulting composite had absorbencies WA and WW, of circa 72g/100cm2 and 4.8g/g. The ratio WA:WW was circa 15:1. The hydrogel to fiber weight ratio was for the partially impregnated fiber circa 7.6:1. The resulting composite may be used as a wound dressing with either of the opposing outer faces in contact with the wound.

### Example 13

An embossed partially impregnated fibre, hydrogel partially impregnated fibre composite reinforced with a non woven scrim was produced as follows.

A precursor solution comprised 68.5 parts by weight of 58% aqueous solution of the Sodium salt of acrylamidomethylpropanesulphonic acid (NaAMPS, LZ2405 Lubrizol), 1 part carboxymethyl cellulose and 0.5 parts acrylic acid (3-sulphopropyl) ester potassium salt (Raschig), 30 parts glycerol, Precursor solution A. 0.14 parts of a 1 to 10 (by weight) mixture of Daracure 1173 photoinitiator (Ciba Speciality Chemicals) and IRR280 cross-linker (PEG400 diacrylate, UCB Chemicals) was added to 100 parts of precursor solution A to make precursor solution B.

Calcium alginate fibre, (50% mannuronic acid, 50% guluronic acid) 100gsm, 250mm width, (Foshan United Medical Technologies Ltd, China) was passed at a speed of 7m/minute under a slot die connected to a reservoir of precursor solution B via a peristaltic pump. The pump speed was adjusted so that circa 0.4 kg/m2 of precursor solution was delivered onto the fibre and cured with a medium pressure mercury arc lamps (GEW), a 20 gsm non woven polypropylene scrim (RKW) was then laid on to the cured gel and then passed under a second slot die connected to a reservoir of precursor solution B such that circa 0.5 kg/m2 of precursor solution was delivered onto the previously cured gel. Calcium alginate fibre, (50% mannuronic acid, 50% guluronic acid) 100gsm, 250mm width, (Foshan United Medical Technologies Ltd, China) was then laid down on top of this uncured precursor solution and then passed under a roller (as in example 8) to assist with the partial impregnation of the fibre by the precursor solution. The embossed composite was then passed under medium pressure mercury arc lamps to cure the embossed, partially impregnated alginate composite. The embossed face of the fibre opposite to the face which was laid onto the precursor solution was not impregnated i.e. it still retained the fibrous feel and texture of the starting fibrous material as did the opposite face to the fibre coated at the first slot die. The resulting composite had absorbencies WA and WW, of 62g/100cm2 and 7/g. The ratio WA:WW was circa 9:1. The hydrogel to fiber weight ratio was for the partially impregnated fiber circa 4.5:1. The resulting composite may be used as a wound dressing with either of the opposing outer faces in contact with the wound.

## Claims

1. A hydrogel/fibre composite structure producible by a method comprising: partially impregnating fibres of a water-swellable fibrous material with an aqueous hydrogel precursor solution comprising at least one polymerisable, and optionally crosslinkable, monomer such that at least partial swelling of the impregnated fibres takes place, and polymerising, and optionally crosslinking, the at least one monomer after impregnation of the fibres and at least partial swelling of the fibres to form the hydrogel within the impregnated fibres of the fibrous material, such that the integrity of the fibrous material is at least partially preserved in the resulting hydrogel/fibre composite.

2. A hydrogel/fibre composite structure according to claim 1, wherein ratio of WA to WW is from 3:1 to 15:1, wherein WA is the weight of fluid (in grams) absorbed in 30 minutes per 100cm² unit area of the hydrogel/fibre composite structure and WW is the weight (in grams) of fluid absorbed in 30 minutes per unit weight (in grams) of hydrogel/fibre composite structure.

3. A hydrogel/fibre composite structure according to any one of the preceding claims, wherein the hydrogel to fibre weight:weight ratio is from 3:1 to 9:1.

4. A hydrogel/fibre composite structure according to any one of the preceding claims, wherein, during polymerisation of the at least one monomer, there is an inhomogenous distribution of hydrogel precursor solution throughout the fibrous material.

5. A hydrogel/fibre composite structure according to any one of the preceding claims, wherein, during polymerisation, some of the fibrous material has not been impregnated with the hydrogel precursor solution.

6. A hydrogel/fibre composite structure according to any one of the preceding claims, wherein the hydrogel/fibre composite is in the form of a layer, and, through at least part of the depth of the layer, there is a gradient in the hydrogel per unit volume or unit weight of fibrous material.

7. A hydrogel/fibre composite structure according to any one of the preceding claims, wherein the fibrous material, before impregnation with the hydrogel precursor solution, is in the form of a layer having opposing first and second faces, and either
(i) the hydrogel precursor solution is applied to only the first of two opposing faces, and the polymerisation carried out such that the resultant structure has a first face of fibres impregnated with hydrogel and the opposing second face having a lower amount of hydrogel (in weight of hydrogel per unit weight of water-swellable fibres) impregnated into the fibres compared to the first face; or
(ii) the hydrogel precursor solution is applied to the first and second faces, and the polymerisation carried out such that in a region between first and second faces there are fibres having a lower amount of hydrogel (in weight of hydrogel per unit weight of water-swellable fibres) impregnated into the fibres compared to the fibres at the first face and the second face.

8. A hydrogel/fibre composite structure according to any one of the preceding claims, wherein the fibrous material, before impregnation, comprises a material selected from an alginate and a poly(meth)acrylate and/or wherein the hydrogel comprises a hydrophilic polymer having multiple pendant sulphonyl groups.

9. A hydrogel/fibre composite structure according to any one of the preceding claims, wherein the hydrogel/fibre composite structure comprises substantially non-compressed areas in the form of discrete islands, each of which is surrounded by a compressed area and/or each of which is a regular shape, with the remaining part of the hydrogel/fibre composite being compressed area.

10. A hydrogel/fibre composite structure according to claim 9, wherein the discrete islands of substantially non-compressed area are each in the form of a hexagon and, together with compressed area surrounding each hexagon, form an array having symmetry selected from p6m, cmm, pgg, and p2.

11. A method of forming a hydrogel/fibre composite structure, the method comprising: partially impregnating fibres of a water-swellable fibrous material with an aqueous hydrogel precursor solution comprising at least one polymerisable, and optionally crosslinkable, monomer such that at least partial swelling of the impregnated fibres takes place, and polymerising, and optionally crosslinking, the at least one monomer after impregnation of the fibres and at least partial swelling of the fibres to form the hydrogel within the impregnated fibres of the fibrous material, such that the integrity of the fibrous material is at least partially preserved in the resulting hydrogel/fibre composite.

12. A method according to claim 11, wherein the method involves, after partially impregnating fibres of the water-swellable fibrous material with the aqueous hydrogel precursor solution, compressing at least part of the fibrous material, and then polymerising and, optionally, crosslinking the at least one monomer to form the hydrogel within the impregnated fibres of the fibrous material, such that at least some of the hydrogel/fibrous composite is compressed.

13. A method according to claim 11, wherein the fibrous material, before impregnation with the hydrogel precursor solution, is in the form of a layer having opposing first and second faces, and the hydrogel precursor solution is applied to only the first of two opposing faces, and at least part of the second face is compressed, and the polymerisation carried out such that the resultant structure has a first face of fibres impregnated with hydrogel and the opposing second face having a lower amount of hydrogel (in weight of hydrogel per unit weight of water-swellable fibres) impregnated into the fibres compared to the first face, and
(i) the second face has compressed and substantially non-compressed areas; and/or
(ii) wherein the substantially non-compressed areas are in the form of discrete islands surrounded by compressed areas.

14. A biomedical product comprising the hydrogel/fibre composite structure according to any one of claims 1 to 10.

15. A biomedical product according to claim 14, wherein the product is in a form selected from a patch, a tape, a bandage, a device and a dressing and/or wherein the product is selected from, a wound dressing, a burn dressings, a biomedical electrode, a haemostatic device, and an ostomy device.

## Patentansprüche

1. Hydrogel/Faser-Verbundstruktur, die durch ein Verfahren herstellbar ist, das umfasst: partielle Imprägnierung von Fasern aus einem wasserquellbaren Fasermaterial mit einer wässrigen Hydrogel-Vorläuferlösung, die mindestens ein polymerisierbares und gegebenenfalls quervernetzungsfähiges Monomer umfasst, sodass zumindest teilweise eine Quellung der imprägnierten Fasern stattfindet, und Polymerisation und gegebenenfalls Vernetzung des mindestens einen Monomers nach der Imprägnierung der Fasern und zumindest teilweise Quellung der Fasern, um das Hydrogel innerhalb der imprägnierten Fasern des Fasermaterials zu bilden, derart, dass die Integrität des Fasermaterials in dem resultierenden Hydrogel/Faser-Verbundwerkstoff zumindest teilweise erhalten bleibt.

2. Hydrogel/Faser-Verbundstruktur gemäß Anspruch 1, wobei das Verhältnis von WA zu WW 3:1 bis 15:1 beträgt, wobei WA das Gewicht der Flüssigkeit (in Gramm) ist, die in 30 Minuten pro 100 cm² Einheitsfläche der Hydrogel/Faser-Verbundstruktur absorbiert wird, und WW das Gewicht (in Gramm) der Flüssigkeit, die in 30 Minuten pro Einheitsgewicht (in Gramm) der Hydrogel/Faser-Verbundstruktur absorbiert wird.

3. Hydrogel/Faser-Verbundstruktur gemäß einem der vorstehenden Ansprüche, wobei das Gewichtsverhältnis von Hydrogel zu Fasergewicht von 3:1 bis 9:1 beträgt.

4. Hydrogel/Faser-Verbundstruktur gemäß einem der vorstehenden Ansprüche, wobei während der Polymerisation des mindestens einen Monomers eine inhomogene Verteilung der Hydrogel-Vorläuferlösung im gesamten Fasermaterial vorliegt.

5. Hydrogel/Faser-Verbundstruktur gemäß einem der vorstehenden Ansprüche, wobei während der Polymerisation ein Teil des Fasermaterials nicht mit der Hydrogel-Vorläuferlösung imprägniert wurde.

6. Hydrogel/Faser-Verbundstruktur gemäß einem der vorstehenden Ansprüche, wobei der Hydrogel/Faser-Verbundstoff in Form einer Schicht vorliegt und durch mindestens einen Teil der Tiefe der Schicht ein Gefälle im Hydrogel pro Volumeneinheit oder Gewichtseinheit von Fasermaterial vorliegt.

7. Hydrogel/Faser-Verbundstruktur gemäß einem der vorstehenden Ansprüche, wobei das Fasermaterial vor der Imprägnierung mit der Hydrogel-Vorläuferlösung in Form einer Schicht mit gegenüberliegenden ersten und zweiten Flächen vorliegt und entweder
(i) die Hydrogel-Vorläuferlösung nur auf die erste von zwei gegenüberliegenden Seiten aufgebracht wird, und die Polymerisation so durchgeführt wird, dass die resultierende Struktur eine erste Seite aus Fasern aufweist, die mit Hydrogel imprägniert sind, und die gegenüberliegende zweite Seite eine geringere Menge an Hydrogel (in Gewichtsprozent Hydrogel pro Gewichtseinheit wasserquellbarer Fasern) aufweist, das in die Fasern imprägniert ist, als die erste Seite;
oder
(ii) die Hydrogel-Vorläuferlösung auf die erste und zweite Seite aufgetragen wird und die Polymerisation so durchgeführt wird, dass in einem Bereich zwischen der ersten und zweiten Seite Fasern mit einer geringeren Menge Hydrogel (in Gewichtsprozent Hydrogel pro Gewichtseinheit wasserquellbarer Fasern), die in die Fasern imprägniert sind, im Vergleich zu den Fasern auf der ersten Seite und der zweiten Seite vorhanden sind.

8. Hydrogel/Faser-Verbundstruktur gemäß einem der vorstehenden Ansprüche, wobei das Fasermaterial vor der Imprägnierung ein Material umfasst, das aus einem Alginat und einem Poly(meth)acrylat gewählt ist und/oder wobei das Hydrogel ein hydrophiles Polymer mit mehreren anhängenden Sulfonylgruppen umfasst.

9. Hydrogel/Faser-Verbundstruktur gemäß einem der vorstehenden Ansprüche, wobei die Hydrogel/Faser-Verbundstruktur im wesentlichen nicht komprimierte Bereiche in Form von separaten Inseln umfasst, von denen jede von einem komprimierten Bereich umgeben ist und/oder von denen jede eine regelmäßige Form hat, wobei der verbleibende Teil des Hydrogel/Faser-Verbundstoffs ein komprimierter Bereich ist.

10. Hydrogel/Faser-Verbundstruktur gemäß Anspruch 9, wobei die separaten Inseln mit im Wesentlichen nicht komprimierter Fläche jeweils in Form eines Sechsecks vorliegen und zusammen mit der komprimierten Fläche, die jedes Sechseck umgibt, eine Anordnung mit Symmetrie bilden, die aus p6m, cmm, pgg und p2 gewählt ist.

11. Verfahren zur Bildung einer Hydrogel/Faser-Verbundstruktur, wobei das Verfahren umfasst: teilweise imprägnierte Fasern aus einem wasserquellbaren Fasermaterial mit einer wässrigen Hydrogel-Vorläuferlösung, die mindestens ein polymerisierbares und gegebenenfalls vernetzbares Monomer umfasst, sodass mindestens ein teilweises Quellen der imprägnierten Fasern stattfindet, und Polymerisieren und gegebenenfalls Quervernetzen, das mindestens eine Monomer nach der Imprägnierung der Fasern und zumindest teilweisem Aufquellen der Fasern, um das Hydrogel innerhalb der imprägnierten Fasern des Fasermaterials zu bilden, sodass die Integrität des Fasermaterials in dem resultierenden Hydrogel/Faserverbundstoff zumindest teilweise erhalten bleibt.

12. Verfahren gemäß Anspruch 11, wobei das Verfahren nach teilweiser Imprägnierung von Fasern des wasserquellbaren Fasermaterials mit der wässrigen Hydrogel-Vorläuferlösung, Komprimierung mindestens eines Teils des Fasermaterials und anschließender Polymerisation und gegebenenfalls Vernetzung des mindestens einen Monomers zur Bildung des Hydrogels innerhalb der imprägnierten Fasern des Fasermaterials umfasst, sodass mindestens ein Teil des Hydrogel/Faserverbundstoffs komprimiert wird.

13. Verfahren gemäß Anspruch 11, wobei das Fasermaterial vor der Imprägnierung mit der Hydrogel-Vorläuferlösung in Form einer Schicht mit gegenüberliegenden ersten und zweiten Flächen vorliegt und die Hydrogel-Vorläuferlösung nur auf die erste von zwei gegenüberliegenden Flächen aufgebracht wird und mindestens ein Teil der zweiten Fläche komprimiert wird, und die Polymerisation so durchgeführt wird, dass die resultierende Struktur eine erste Seite aus Fasern aufweist, die mit Hydrogel imprägniert sind, und die gegenüberliegende zweite Seite eine geringere Menge an Hydrogel (in Gewichtsprozent Hydrogel pro Gewichtseinheit wasserquellbarer Fasern) aufweist, das in die Fasern imprägniert ist, als die erste Seite, und
(i) die zweite Seite komprimierte und im Wesentlichen nicht komprimierte Bereiche aufweist;
und/oder
(ii) wobei die im Wesentlichen nicht komprimierten Bereiche in Form von separaten Inseln vorliegen, die von komprimierten Bereichen umgeben sind.

14. Biomedizinisches Produkt, umfassend die Hydrogel/Faser-Verbundstruktur gemäß einem der Ansprüche 1 bis 10.

15. Biomedizinisches Produkt gemäß Anspruch 14, wobei das Produkt in einer Form vorliegt, die aus einem Pflaster, einer Binde, einer Bandage, einer Vorrichtung und einem Verband gewählt ist und/oder wobei das Produkt aus einem Wundverband, einem Brandwundenverband, einer biomedizinischen Elektrode, einer blutstillenden Vorrichtung und einer Stomavorrichtung gewählt ist.

## Revendications

1. Une structure composite hydrogel / fibre pouvant être produite par un procédé comprenant :
l'imprégnation partielle de fibres d'un matériau fibreux gonflant à l'eau avec une solution de précurseur d'hydrogel aqueux comprenant au moins un monomère polymérisable, et éventuellement réticulable, de sorte qu'un gonflement au moins partiel des fibres imprégnées se produise, et polymérise, et éventuellement réticule, au moins un monomère après imprégnation des fibres et au moins un gonflement des fibres pour former l'hydrogel à l'intérieur des fibres imprégnées de la matière fibreuse, de sorte que l'intégrité de la matière fibreuse soit au moins partiellement préservée dans le composite hydrogel / fibre résultant.

2. Une structure composite hydrogel / fibre selon la revendication 1, dans laquelle le rapport de WA à WW est de 3 : 1 à 15 : 1, WA étant le poids de fluide (en grammes) absorbé en 30 minutes par unité de surface de 100cm² la structure composite hydrogel / fibre et WW est le poids (en grammes) de fluide absorbé en 30 minutes par unité de poids (en grammes) de structure composite hydrogel / fibre.

3. Une structure de composite hydrogel / fibre selon l'une quelconque des revendications précédentes, dans laquelle le rapport de l'hydrogel au poids des fibres est compris entre 3 : 1 et 9 : 1

4. Une structure composite hydrogel / fibre selon l'une quelconque des revendications précédentes, dans laquelle, pendant la polymérisation d'au moins un monomère, il y a une distribution inhomogène de la solution de précurseur d'hydrogel dans tout le matériau fibreux.

5. Une structure composite d'hydrogel / fibre selon l'une quelconque des revendications précédentes, dans laquelle, pendant la polymérisation, une partie de la matière fibreuse n'a pas été imprégnée de la solution de précurseur d'hydrogel.

6. Une structure composite d'hydrogel / fibre selon l'une quelconque des revendications précédentes, dans laquelle le composite hydrogel / fibre est sous la forme d'une couche, et, à travers au moins une partie de la profondeur de la couche, il y a un gradient dans l'hydrogel par unité de volume ou poids unitaire de matière fibreuse.

7. Une structure composite d'hydrogel / fibre selon l'une quelconque des revendications précédentes, dans laquelle le matériau fibreux, avant l'imprégnation avec la solution de précurseur d'hydrogel, est sous la forme d'une couche ayant des première et seconde faces opposées, et soit
(i) la solution de précurseur d'hydrogel est appliquée uniquement sur la première des deux faces opposées, et la polymérisation est effectuée de sorte que la structure résultante présente une première face de fibres imprégnées d'hydrogel (en poids d'hydrogel par unité de poids de gonflement à l'eau) imprégné dans les fibres par rapport à la première face ; ou
(ii) la solution de précurseur d'hydrogel est appliquée sur les première et seconde faces, et la polymérisation est réalisée de sorte que dans une région entre les première et seconde faces, il y a des fibres ayant une quantité inférieure d'hydrogel (en poids d'hydrogel par poids unitaire d'eau fibres aptes à l'usage) imprégnées dans les fibres par rapport aux fibres de la première face et de la seconde face.

8. Une structure composite hydrogel / fibre selon l'une quelconque des revendications précédentes, dans laquelle le matériau fibreux, avant imprégnation, comprend un matériau choisi parmi un alginate et un poly(méth)acrylate et / ou dans lequel l'hydrogel comprend un polymère hydrophile ayant plusieurs groupes sulfonyle pendants.

9. Une structure composite hydrogel / fibre selon l'une quelconque des revendications précédentes, dans laquelle la structure composite hydrogel / fibre comprend des zones sensiblement non comprimées sous la forme d'îlots discrets, dont chacun est entouré par une zone comprimée et / ou chacun est de forme régulière, la partie de rétention du composite hydrogel / fibre étant une zone comprimée.

10. Une structure composite hydrogel / fibre selon la revendication 9, dans laquelle les îlots discrets de la zone sensiblement non comprimée ont chacun la forme d'un hexagone et, ensemble avec la zone comprimée entourant chaque hexagone, forment un réseau ayant une symétrie choisie parmi p6m, cmm, pgg et p2.

11. Un procédé de formation d'une structure composite hydrogel / fibre, la méthode comprenant : l'imprégnation partielle de fibres d'un matériau fibreux gonflable à l'eau avec une solution aqueuse d'hydrogel précurseur comprenant au moins un monomère polymérisable, et éventuellement réticulable, tel qu'un gonflement au moins partiel des fibres imprégnées a lieu, et polymériser, et éventuellement réticuler, au moins un monomère après imprégnation des fibres et gonflement au moins partiel des fibres pour former l'hydrogel au sein des fibres imprégnées de la matière fibreuse, de sorte que l'intégrité de la matière fibreuse est au moins partiellement conservée dans le composite hydrogel / fibre résultant.

12. Un procédé selon la revendication 11, dans lequel le procédé implique, après imprégnation partielle des fibres du matériau fibreux gonflable à l'eau avec la solution de précurseur d'hydrogel aqueux, la compression d'au moins une partie du matériau fibreux, puis la polymérisation et, éventuellement, la réticulation à au moins un monomère pour former l'hydrogel dans les fibres imprégnées de la matière fibreuse, de sorte qu'au moins une partie de l'hydrogel / composite fibreux est comprimée.

13. Un procédé selon la revendication 11, dans lequel le matériau fibreux, avant l'imprégnation avec la solution de précurseur d'hydrogel, est sous la forme d'une couche ayant des première et seconde faces opposées, et la solution de précurseur d'hydrogel est appliquée uniquement à la première des deux faces opposées, et au moins une partie de la seconde face est comprimée, et la polymérisation effectuée de sorte que la structure résultante présente une première face de fibres imprégnée d'hydrogel et la seconde face opposée ayant une quantité inférieure d'hydrogel (en poids d'hydrogel par unité de poids de fibres gonflables à l'eau) imprégnées dans les fibres par rapport à la première face, et
(i) la seconde face comporte des zones comprimées et sensiblement non compressées ; et / ou
(ii) les zones sensiblement non comprimées sont sous la forme d'îlots discrets entourés de zones comprimées.

14. Un produit biomédical comprenant la structure composite hydrogel / fibre selon l'une quelconque des revendications 1 à 10.

15. Un produit biomédical selon la revendication 14, dans lequel le produit est sous une forme choisie parmi un timbre, une bande, un pansement, un dispositif et un pansement et / ou dans lequel le produit est choisi parmi un pansement, un pansement pour brûlures, une électrode biomédicale, un dispositif hémostatique et un dispositif d'ostomie.
